# EUROPÄISCHE PATENTSCHRIFT

(11) **EP 2 365 367 B1**
(45) Veröffentlichungstag und Bekanntmachung des Hinweises auf die Patenterteilung: **28.11.2012**
(21) Anmeldenummer: 11169129.1
(22) Anmeldetag: 04.05.2010
(51) Int. Cl.: G02B 6/44, H02G 15/18, H02G 15/117

(54) **Kabelmuffe mit Kabelabdichtvorrichtung**
Cable hood with cable sealing device
Boîtier de cable avec dispositif de scellement

(30) Priorität: 14.05.2009 DE 202009006991 U
(43) Veröffentlichungstag der Anmeldung: 14.09.2011
(62) Teilanmeldung aus: 10004675.4
(73) Patentinhaber: CCS Technology, Inc., Wilmington, DE 19803 (US)
(72) Erfinder: Müller, Thorsten, Dipl.-Ing., 58708 Menden (DE); Eichstädt, Andreas, 58675 Hemer (DE); Meyer, Thomas, 12557 Berlin (DE)
(74) Vertreter: Sturm, Christoph

(56) Entgegenhaltungen:
- EP-A1- 1 215 791
- WO-A1-2007/149104
- WO-A2-2009/091465
- DE-C1- 4 333 067
- DE-U1-202006 006 019
- GB-A- 2 368 137
- US-A- 5 775 702
- US-A- 5 949 022

## Beschreibung

Die Erfindung betrifft eine Kabelmuffe nach dem Oberbegriff des Anspruchs 1.

Beim Aufbau von Lichtwellenleiterkabelnetzen ist es erforderlich, sogenannte Verbindungsstellen bzw. Abzweigstellen für Lichtwellenleiterkabel vorzusehen, wobei an den Verbindungsstellen bzw. Abzweigstellen Spleiße zwischen in den Lichtwellenleiterkabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Lichtwellenleiterkabel über einen Dichtungskörper einer Kabelmuffe in einen Innenraum der Kabelmuffe eingeführt werden.

So ist aus der DE 20 2006 006 019 U1 ein geteilter Dichtungskörper einer Kabelmuffe mit mehreren Dichtungskörpersegmenten, nämlich einem mittleren, zylinderartigen Dichtungskörpersegment und mehreren zylindersegmentartigen Dichtungskörpersegmenten bekannt, wobei das mittlere, zylinderartige Dichtungskörpersegment an einer äußeren Mantelfläche über den Umfang derselben verteilt mehrere Ausnehmungen aufweist, wobei in jede der Ausnehmungen des mittleren Dichtungskörpersegments jeweils ein zylindersegmentartiges Dichtungskörpersegment einführbar ist, und wobei zwischen dem mittleren Dichtungskörpersegment und jedem angrenzenden, zylindersegmentartigen Dichtungskörpersegment jeweils eine Kabeleinführungsöffnung mit einem im Bereich der Kabeleinführungsöffnung positionierten, gelartigen Dichtungselement zur Aufnahme und individuellen Abdichtung jeweils eines einzigen Kabels ausgebildet ist.

Bei dem aus der DE 20 2006 006 019 U1 bekannten Dichtungskörper einer Kabelmuffe ist über jede Kabeleinführungsöffnung, die zwischen dem mittleren Dichtungskörpersegment und einem zylindersegmentartigen Dichtungskörpersegment ausgebildet ist, jeweils ein einziges Kabel in dem Innenraum der Kabelmuffe einführbar, und zwar ein sogenanntes Standardkabel, dessen Außendurchmesser insbesondere zwischen 10 mm und 25 mm beträgt. Für die Einführung von Lichtwellenleiterkabeln mit kleineren Außendurchmessern sind die Kabeleinführungsöffnungen des Dichtungskörpers nicht ausgelegt.

Dann, wenn über eine Kabeleinführungsöffnung des Dichtungskörpers gemäß der DE 20 2006 006 019 U1 als sogenannte Minikabel ausgeführte Lichtwellenleiterkabel in den Innenraum der Kabelmuffe eingeführt werden sollen, wird im Bereich einer solchen Kabeleinführungsöffnung ein Kabelgrommet positioniert, wie es zum Beispiel aus der DE 20 2008 002 464 U1 bekannt ist. Derartige Minikabel verfügen über einen Außendurchmesser insbesondere zwischen 3 mm und 10 mm.

Dann, wenn Lichtwellenleiterkabel mit noch geringeren Außendurchmessern über eine Kabeleinführungsöffnung des aus der DE 20 2006 006 019 U1 bekannten Dichtungskörpers in den Innenraum der Kabelmuffe eingeführt werden sollen, sind die Kabelgrommets gemäß DE 20 2008 002 464 U1 zur Anpassung der jeweiligen Kabeleinführungsöffnung an die Lichtwellenleiterkabel mit den geringeren Außendurchmessern nicht geeignet. Derartige Lichtwellenleiterkabel, die über einen noch geringeren Außendurchmesser wie Minikabel verfügen, werden auch als Mikrokabel bezeichnet, wobei der Außendurchmesser von Mikrokabeln typischerweise an weniger als 3 mm beträgt. Zum Schutz der Mikrokabel vor unzulässig hohen Beanspruchungen sind die Mikrokabel außerhalb der Kabelmuffe in sogenannten Mikroducts, die auch als Mikroröhrchen bezeichnet werden, geführt. Bislang ist es nicht möglich, solche außerhalb einer Kabelmuffe in Mikroducts geführte Mikrokabel sicher und einfach in den Innenraum einer Kabelmuffe über konventionelle Kabeleinführungsöffnungen, die auf die Handhabung sogenannter Standardkabel ausgelegt sind, einzuführen.

Es sei an dieser Stelle darauf hingewiesen, dass die oben erwähnten Größenordnungen für die Außendurchmesser sogenannter Standardkabel, sogenannter Minikabel und sogenannter Mikrokabel lediglich rein exemplarischer Natur sind. Die Außendurchmesser dieser Kabel können von den oben genannten Bereichen abweichen.

Bei Mikrokabeln handelt es sich jedoch um solche Kabel, die über einen derart geringen Außendurchmesser verfügen, dass sie zum Schutz vor unzulässig hohen mechanischen Beanspruchungen, wie zum Beispiel einer unzulässig hohen Zugbeanspruchung, außerhalb des Innenraums einer Kabelmuffe in Mikroducts geführt werden.

Die DE 43 33 067 C1 offenbart eine Kabelmuffe mit einem Dichtungskörper, über den Kabel unterschiedlicher Durchmesser in einen Innenraum der Kabelmuffe einführbar sind.

Weiterer Stand der Technik ist aus der WO 2009/091465 A2 bekannt.

Der hier vorliegenden Erfindung liegt das Problem zu Grunde, eine neuartige Kabelmuffe zu schaffen, die auf die Handhabung von Mikrokabeln angepasst werden kann.

Dieses Problem wird durch eine Kabelmuffe gemäß Anspruch 1 gelöst.

Die erfindungsgemäße Kabelmuffe weist mindestens eine mit dem Dichtungskörper der Kabelmuffe außerhalb des Innenraums derselben verbindbare Handhabungseinrichtung für Mikroducts auf, in denen die Mikrokabel außerhalb des von der Kabelmuffe definierten Innenraums geführt sind, wobei die oder jede Handhabungseinrichtung jeweils einer Kabeleinführungsöffnung des Dichtungskörpers derart zugeordnet ist, dass in einer Handhabungseinrichtung die Mikroducts derjenigen Mikrokabel handhabbar sind, die über den in der jeweiligen Kabeleinführungsöffnung positionierten Adapter in den Innenraum der Kabelmuffe einführbar sind.

Die Handhabungseinrichtung dient der Abfangung und Führung der Mikroducts außerhalb des Innenraums der Kabelmuffe und der Abdichtung desjenigen Bereichs, in welchem die Mikrokabel aus den Mikroducts herausgeführt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1a bis 1c:: einen Dichtungskörper einer erfindungsgemäßen Kabelmuffe nach einem ersten Ausführungsbeispiel der Erfindung in unterschiedlichen perspektivischen Ansichten;
- Fig. 2a bis 2d:: Details des Dichtungskörpers der Fig.1a bis 1c in unterschiedlichen Ansichten;
- Fig. 3a und 3b:: einen Dichtungskörper einer erfindungsgemäßen Kabelmuffe nach einem ersten Ausführungsbeispiel der Erfindung in unterschiedlichen perspektivischen Ansichten;
- Fig. 4a bis 4d:: Details des Dichtungskörpers der Fig.3a und 3b in unterschiedlichen Ansichten; und
- Fig. 5a bis 5d:: ein weiteres Detail der erfindungsgemäßen Kabelmuffe in unterschiedlichen perspektivischen Ansichten.

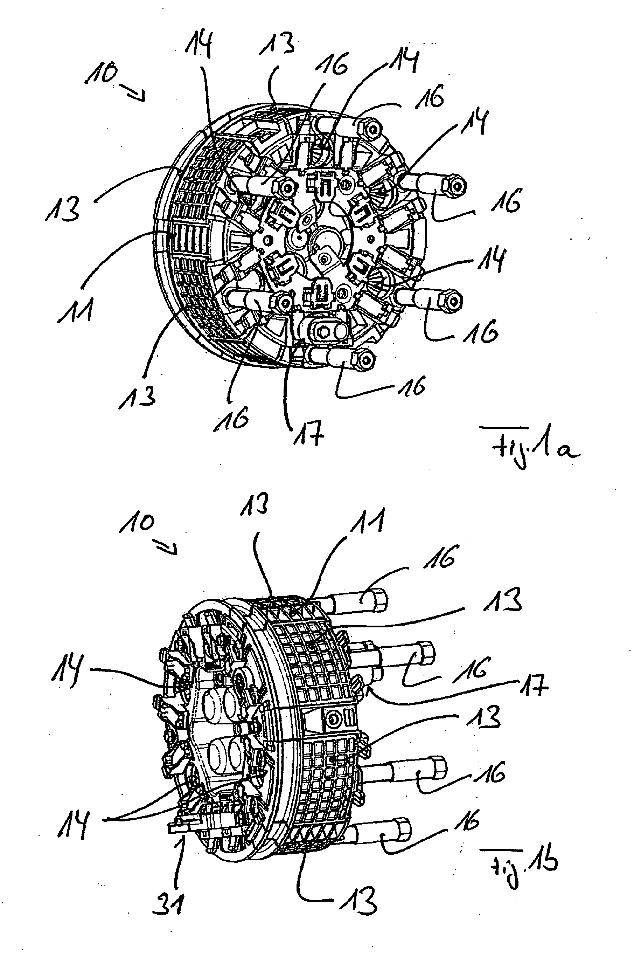

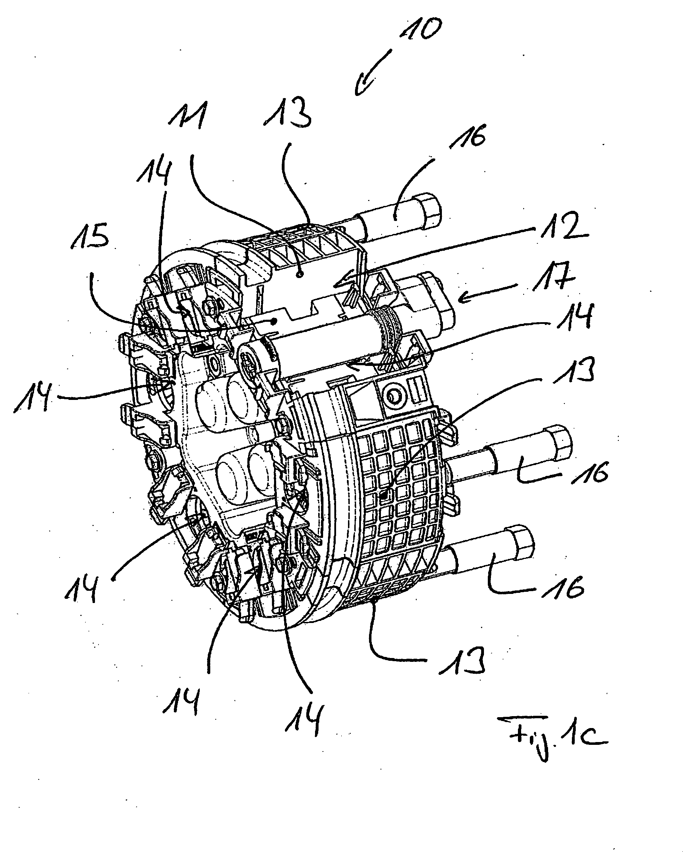

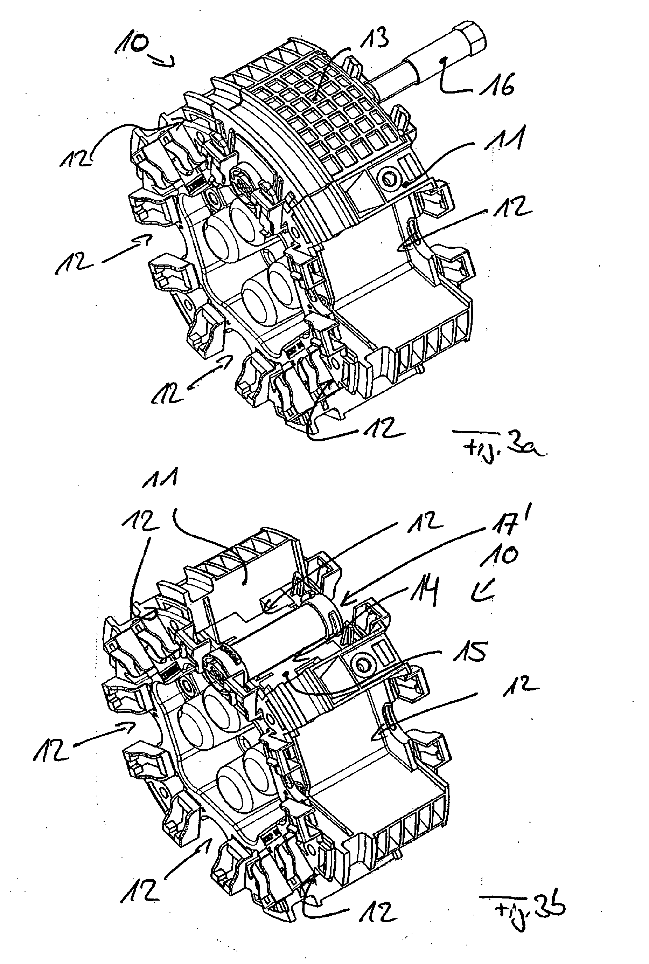

Fig. 1a bis 1c sowie Fig. 3a und 3b zeigen einen Dichtungskörper 10 einer Kabelmuffe. Bei dem in Fig. 1 dargestellten Dichtungskörper 10 handelt es sich vorzugsweise um den Dichtungskörper gemäß DE 20 2006 006 019 U1.

So umfasst der geteilte Dichtungskörper 10 ein mittleres, zylinderartiges Dichtungskörpersegment 11, welches an einer äußeren Mantelfläche mehrere Ausnehmungen 12 (siehe insbesondere Fig. 1c, 3a und 3b) aufweist, wobei in jede der Ausnehmungen 12 des mittleren Dichtungskörpersegments 11 jeweils ein zylindersegmentartiges Dichtungskörpersegment 13 einführbar ist.

Zwischen dem mittleren Dichtungskörpersegment 11 und jedem an dasselbe angrenzenden, zylindersegmentartigen Dichtungskörpersegment 13 ist jeweils eine Kabeleinführungsöffnung 14 zur Aufnahme und Abdichtung eines Lichtwellenleiterkabels ausgebildet, wobei die Kabeleinführungsöffnung 14 zur Aufnehme und Abdichtung eines sogenannten Standardlichtwellenleiterkabels mit einem Außendurchmesser zwischen 10 mm und 25 mm ausgelegt ist. Zur Abdichtung eines solchen Lichtwellenleiterkabels sind in der jeweiligen Kabeleinführungsöffnung 14 gelartige Dichtungselemente 15 (siehe Fig. 1c, 3b) angeordnet, die unter Abdichtung eines in die jeweilige Kabeleinführungsöffnung 14 eingeführten Lichtwellenleiterkabels über den zylindersegmentartigen Dichtungskörpersegmenten 13 zugeordnete Betätigungseinrichtungen 16 im Bereich jeder Kabeleinführungsöffnung 14 individuell komprimierbar sind.

Hinsichtlich weiterer konstruktiver und funktionaler Details des Dichtungskörpers 10 wird auf die DE 20 2006 006 019 U1 verwiesen, auf deren Offenbarungsgehalt hier explizit Bezug genommen wird.

Die hier vorliegende Erfindung betrifft nun solche Details einer Kabelmuffe, mithilfe derer der Dichtungskörper 10 derselben dahingehend angepasst werden kann, dass Mikrokabel mit einem relativ geringen Außendurchmesser von vorzugsweise weniger als 3 mm einfach und sicher über die auf die Handhabung sogenannter Standardlichtwellenleiterkabel ausgelegten Kabeleinführungsöffnungen 14 in den Innenraum der Kabelmuffe eingeführt werden können.

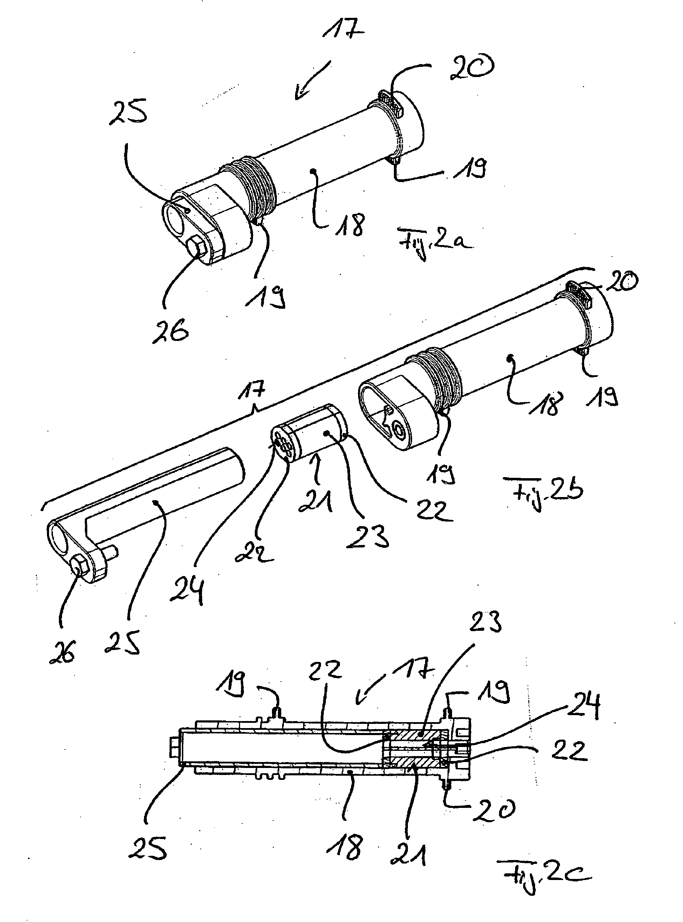

In dem in Fig. 1a bis 2d gezeigten Ausführungsbeispiel umfasst die Kabelmuffe mindestens einen Adapter 17, der in Fig. 2a bis 2d in unterschiedlichen Darstellungen jeweils in Alleindarstellung gezeigt ist. Ein solcher Adapter 17 in eine zwischen dem mittleren Dichtungskörpersegment 11 und einem zylindersegmentartigen Dichtungskörpersegment 13 ausgebildete Kabeleinführungsöffnung 14 einsetzbar, um so die Kabeleinführungsöffnung 14, die auf die Handhabung eines Standardlichtwellenleiterkabels ausgelegt ist, auf die Handhabung von Mikrokabeln anzupassen.

Der Adapter 17 der Fig. 2a bis 2c verfügt über einen zylinderartigen bzw. rohrartigen Grundkörper 18, der einen Außendurchmesser aufweist, der dem Außendurchmesser eines Standardkabels entspricht, auf dessen Abdichtung und damit Handhabung die Kabeleinführungsöffnung 14 bzw. das Dichtungselement 15 der jeweiligen Kabeleinführungsöffnung 14 ausgelegt ist.

Der zylinderartige bzw. rohrartige Grundkörper 18 verfügt über Vorsprünge 19, über die derselbe in entsprechende Ausnehmungen eines Gehäuses des mittleren Dichtungskörpersegments 11 eingeführt werden kann. Ein weiterer Vorsprung 20 des zylinderartigen bzw. rohrartigen Grundkörpers 18 des Adapters 17 greift in eine entsprechende Ausnehmung eines Gehäuses eines zylindersegmentartigen Dichtungskörpersegments 13 ein. Hierdurch kann der zylinderartige bzw. rohrartige Grundkörper 18 in seiner Relativposition zu den Dichtungskörpersegmenten 11 und 13, welche die jeweilige Kabeleinführungsöffnung 14 definieren, festgelegt bzw. fixiert werden.

Im Grundkörper 18 des Adapters 7 der Fig. 2a bis 2c ist eine Führungs- und Abdichteinrichtung 21 für Mikrokabel positioniert. Diese Führungs- und Abdichteinrichtung 21 für Mikrokabel verfügt gemäß Fig. 2b über ein zwischen zwei Führungsplatten 22 positioniertes, zusammendrückbares bzw. komprimierbares Dichtungselement 23.

Fig. 2b kann entnommen werden, dass die Führungs- und Abdichteinrichtung 21 der Führung und Abdichtung von sechs Mikrokabeln dient, da die Führungs- und Abdichteinrichtung 21 gemäß Fig. 2b über sechs entsprechende Führungskanäle 24 für Mikrokabel verfügt.

Über den vom zylinderartigen oder rohrartigen Grundkörper 18 eines Adapters 17 definierten Innenraum, in welchem die jeweilige, z. B. als Mehrfachdichtstopfen ausgebildete Führungs- und Abdichteinrichtung 21 des jeweiligen Adapters 17 positioniert ist, können die Mikrokabel in den Innenraum einer Kabelmuffe eingeführt werden, wobei über die Führungs- und Abdichteinrichtung 21 die einzuführenden Mikrokabel einerseits gegeneinander und andererseits gegen den Grundkörper 18 des jeweiligen Adapters 17 abgedichtet werden können.

Zur Abdichtung der über einen Adapter 17 in den Innenraum einer Kabelmuffe eingeführten Mikrokabel wird die Führungs- und Abdichteinrichtung 21 des jeweiligen Adapters 17 mithilfe eines Druckstücks 25 komprimiert, wobei im Ausführungsbeispiel der Fig. 2a bis 2c die im Grundkörper 18 des jeweiligen Adapters 17 positionierte Führungs- und Abdichteinrichtung 21 unabhängig vom Dichtungselement 15 der jeweiligen Kabeleinführungsöffnung 14, in welcher der Adapter 17 positionierbar ist, komprimiert und dekomprimiert werden kann.

Hierzu ist dem Druckstück 25 des in Fig. 2a bis 2c gezeigten Adapters 17 ein als Schraube ausgebildetes Betätigungselement 26 zugeordnet, über die das Druckstück 25 mit dem Grundkörper 18 des Adapters 17 verschraubt werden kann, um so die Eindringtiefe des Druckstücks 25 in den Grundkörper 18 und so letztendlich den Grad der Komprimierung der im Grundkörper 18 positionierten Führungs- und Abdichteinrichtung 21 zu bestimmen.

Im Ausführungsbeispiel der Fig. 1a bis 2c kann demnach einerseits im Bereich jeder Kabeleinführungsöffnung 14 der in eine Kabeleinführungsöffnung 14 einsetzbare Adapter 17 über den jeweiligen Dichtungskörpersegment 13 zugeordnete Betätigungselement 16 individuell abgedichtet werden, andererseits kann im Bereich jedes Adapters 17 die Führungs- und Abdichteinrichtung 21 des jeweiligen Adapters 17 über das Betätigungselement 26 individuell abgedichtet werden.

Soll demnach über einen bereits im Bereich einer Kabeleinführungsöffnung 14 installierten Adapter 17 ein neues Mikrokabel in die Kabelmuffe eingeführt werden, so muss die Dichtung zwischen dem Grundkörper 18 des Adapters 17 und der jeweiligen Kabeleinführungsöffnung 14 hierzu nicht gelöst werden, sondern lediglich die Abdichtung der Führungs- und Abdichteinrichtung 21 des jeweiligen Adapters 17.

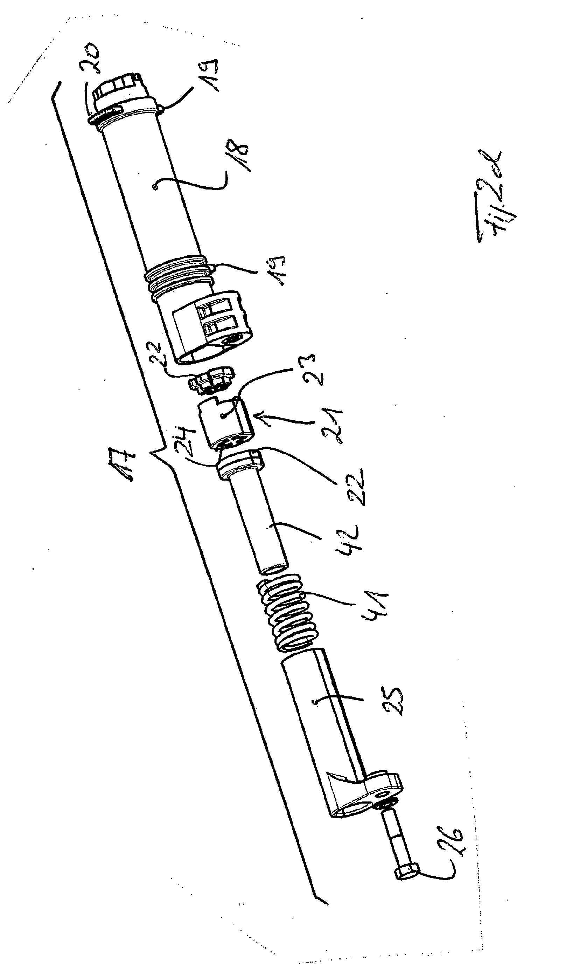

Fig. 2d zeigt eine Weiterentwicklung des Adapters 17 der Fig. 2a bis 2c. So ist in der Variante der Fig. 2d in den Adapater 17 ein Federelement 41 eingebracht, welches an einer Aufnahme 42 geführt ist und sich sowohl am Druckstück 25 als auch über die Aufnahme 42 an der Führungs- und Abdichteinrichtung 21 abstützt. Über das Federelement 41 können sich bei Temperaturschwankungen ausbildende Änderungen der Dichtungseigenschaften des Dichtungselements 23 kompensiert werden, um so in einem großen Temperaturbereich gute Dichtungseigenschaften zu gewährleisten. Ferner können über das Federelement 41 auf die Mikrokabel einwirkende Kräfte verringert werden.

Fig. 3a bis 4d zeigen ein zweites Ausführungsbeispiel einer erfindungsgemäßen Kabelmuffe mit einem alternativen Adapter 17', der ebenso wie der Adapter 17 des Ausführungsbeispiels der Fig. 1a bis 2c in eine Kabeleinführungsöffnung 14 des Dichtungskörpers 10 der erfindungsgemäßen Kabelmuffe einsetzbar ist. Zur Vermeidung unnötiger Wiederholungen werden für den Adapter 17' für gleiche Baugruppe gleiche Bezugsziffern verwendet wie für den Adapter 17 und nachfolgend nur auf die Details eingegangen, durch die sich der Adapter 17' vom Adapter 17 unterscheidet.

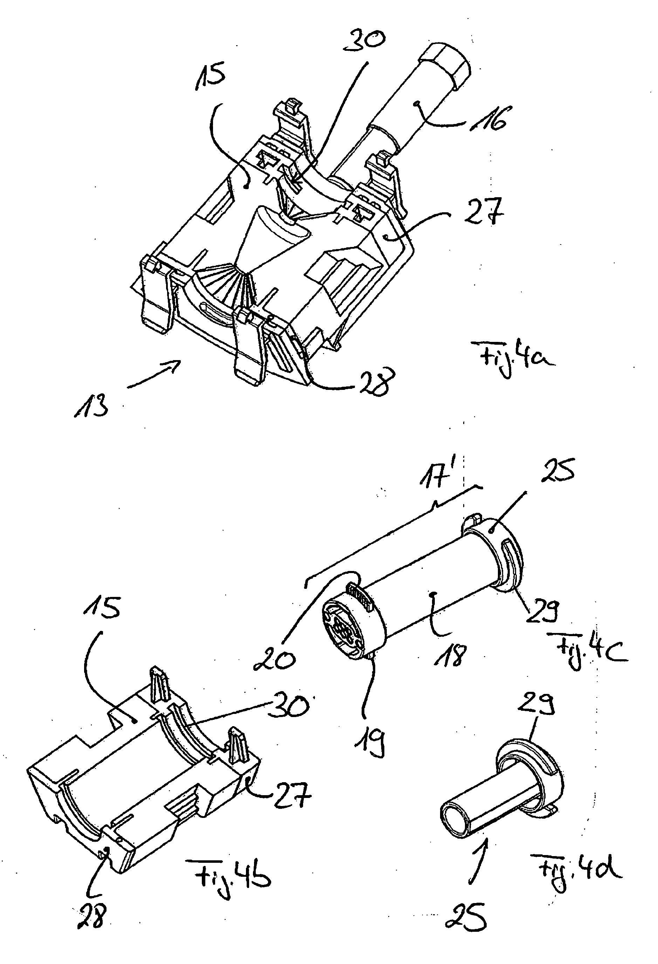

Der Hauptunterschied des Adapters 17' vom Adapter 17 besteht darin, dass beim Adapter 17' die im Grundkörper 18 desselben positionierte Führungs- und Abdichteinrichtung 21, die in Fig. 4c und 4d nicht sichtbar ist, nicht unabhängig vom Dichtungselement 15 der jeweiligen Kabeleinführungsöffnung 14 komprimiert und dekomprimiert werden kann, sondern nur zusammen mit dem Dichtungselement 15 der jeweiligen Kabeleinführungsöffnung 14, in die der jeweilige Adapter 17' eingesetzt ist. Hierzu ist das der Komprimierung und Dekomprimierung der im Grundkörper 18 des Adapters 17' positionierten Führungs- und Abdichteinrichtung 21 dienende Druckstück 25 des Adapters 17 über das Betätigungselement 16 des Dichtungskörpersegments 13 komprimierbar und dekomprimierbar, über das auch das Dichtungselement 15 der Kabeleinführungsöffnung 14 komprimierbar und dekomprimierbar ist.

Das Dichtungselement 15 der Kabeleinführungsöffnung 14, welches eigentlich der Abdichtung des Grundkörpers 18 des Adapters 17' in der jeweiligen Kabeleinführungsöffnung 14 dient, ist zwischen Federscheiben 27 und 28 positioniert, die vom Gehäuse der jeweiligen Dichtungskörpersegmente 11, 13 aufgenommen sind. Auf eine Federscheibe, nämlich auf die Federscheibe 27 (siehe Fig. 4a), wirkt das Betätigungselement 16 zur Komprimierung und Dekomprimierung des Dichtungselements 15 ein.

Das der Komprimierung und Dekomprimierung der Führungs- und Abdichteinrichtung 21 dienende Druckstück 25 des in die jeweilige Kabeleinführungsöffnung 14 eingesetzten Adapters 17' verfügt über einen Vorsprung 29, mit dem das Druckstück 25 in eine Ausnehmung 30 der Federscheibe 27 eingreift, die vom Betätigungselement 16 betätigt wird.

Durch Betätigung des Betätigungselements 16 werden die Federscheiben 27 und 28 relativ zueinander verlagert, um hierdurch das Dichtungselement 15 zu komprimieren bzw. zu dekomprimieren.

Bedingt dadurch, dass das Druckstück 25 des Adapters 17' über seinen Vorsprung 29 in die Ausnehmung 30 der Federscheibe 27 eingreift, wird gleichzeitig hiermit das Druckstück 25 gegenüber dem Grundkörper 18 des Adapters 17' verlagert, um so gleichzeitig die im Grundkörper 18 des Adapters 17' positionierte Führungs- und Abdichteinrichtung 21 zu komprimieren bzw. zu dekomprimieren.

Soll demnach über einen bereits im Bereich einer Kabeleinführungsöffnung 14 installierten Adapter 17' ein neues Mikrokabel in den Innenraum der Kabelmuffe eingeführt werden, so muss hierzu einerseits die Abdichtung im Bereich der Führungs- und Abdichteinrichtung 21 des jeweiligen Adapters 17' als auch die Abdichtung des Grundkörpers 18 des jeweiligen Adapters 17' in Bereich der Kabeleinführungsöffnung 14 gelöst werden.

Ein Vorteil der Ausführungsvariante des Adapters 17' gegenüber dem Adapter 17 besteht jedoch darin, dass das Betätigungselement 16 federunterstützt ist und so Kräfte zum Dekomprimieren und Komprimieren gleichmäßiger übertragen werden können.

Weiterhin kann über das federunterstützte Betätigungselement 16 eine temperaturbedingte Änderung der Dichteigenschaften der Dichtelemente 15 sowie 23 kompensiert werden, sodass über einen größeren Temperaturbereich eine gute Abdichtung der Mikrokabel, die in die Kabelmuffe eingeführt werden, bereitgestellt werden kann.

Die über die Adapter 17 bzw. 17' in den Innenraum einer erfindungsgemäßen Kabelmuffe einführbaren Mikrokabel werden außerhalb des Bereichs der Kabelmuffe im Bereich von sogenannten Mikroducts bzw. Mikroröhrchen geführt. Nach einer vorteilhaften Weiterbildung der hier vorliegenden Erfindung verfügt die erfindungsgemäße Kabelmuffe über mindestens eine mit dem Dichtungskörper 10 der Kabelmuffe außerhalb des Innenraums derselben verbindbare Handhabungseinrichtung für solche Mikroducts, in denen die Mikrokabel außerhalb des von der Kabelmuffe definierten Innenraums geführt sind.

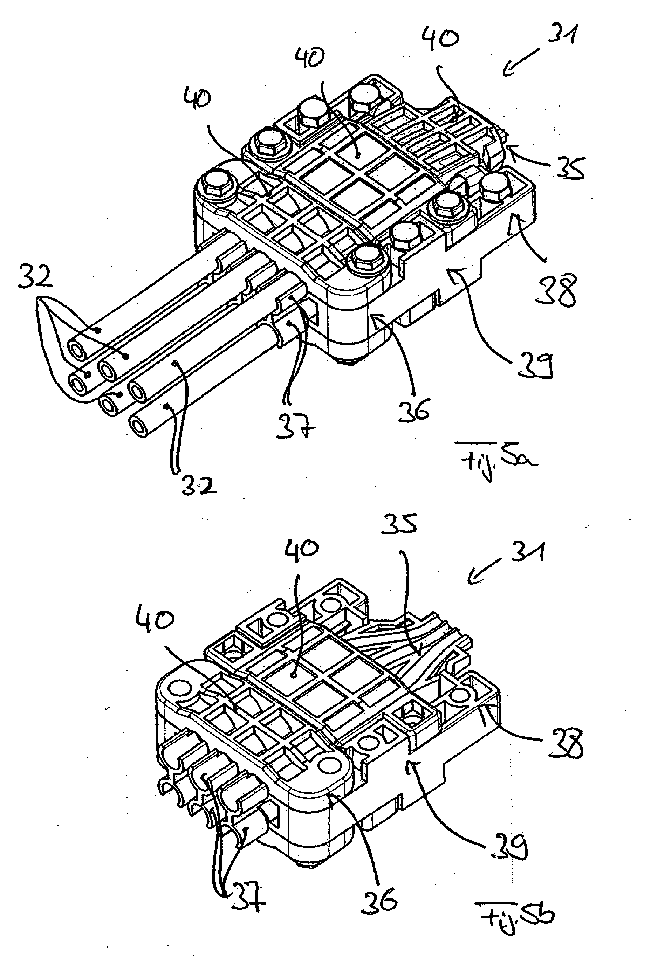

In Fig. 1b ist stark schematisiert eine Handhabungseinrichtung 31 für Mikroducts gezeigt. Fig. 5a bis 5d zeigen eine solche Handhabungseinrichtung 31 für Mikroducts in größerem Detail in Alleindarstellung ohne Kabelmuffe, wobei in Fig. 5b die Handhabungseinrichtung 31 zusammen mit sechs Mikroducts 32 gezeigt ist.

Jeder Kabeleinführungsöffnung 14 des Dichtungskörpers 10 einer erfindungsgemäßen Kabelmuffe, in welcher ein Adapter 17 bzw. 17' zur Einführung mehrerer Mikrokabel in den Innenraum der Kabelmuffe zugeordnet ist, kann eine solche Handhabungseinrichtung 31 für die Mikroducts 32 zugeführt werden, in welchen die über den jeweiligen Adapter 17 bzw. 17' in den Innenraum der Kabelmuffe einzuführenden Mikrokabel außerhalb der Kabelmuffe geführt sind.

Jede Handhabungseinrichtung 31 verfügt über Zugabfangmittel 33 für die Mikroducts 32, Dichtmittel 34 für die Mikroducts und Mikrokabel sowie über Führungskanäle 35 für die Mikrokabel. Die Zugabfangmittel 33 für die Mikroducts 32 sind an einem ersten Endabschnitt 36 der Handhabungseinrichtung 31, an welchem die Mikroducts 32 und die in denselben geführten Mikrokabel in die Handhabungseinrichtung 31 einführbar sind, ausgebildet. Den Zugabfangmitteln 33 für die Mikroducts 32 sind dabei kreissegmentförmige Führungsmittel 37 für die Mikroducts 32 vorgelagert.

Die Führungskanäle 35 für die aus den Mikroducts 32 herausgeführten bzw. die vereinzelten Mikrokabel sind an einem zweiten, gegenüberliegenden Endabschnitt 38 der Handhabungseinrichtung 31 ausgebildet. Ausgehend von diesen Führungskanälen 35 können die vereinzelten Mikrokabel in den jeweiligen Adapter 17 bzw. 17', nämlich den Grundkörper 18 desselben, einführt werden.

Das Dichtmittel 34 der Handhabungseinrichtung 31 ist in einem zwischen dem ersten Endabschnitt 36 und dem zweiten Endabschnitt 38 positionierten Mittelabschnitt 39 ausgebildet und demnach zwischen denselben positioniert.

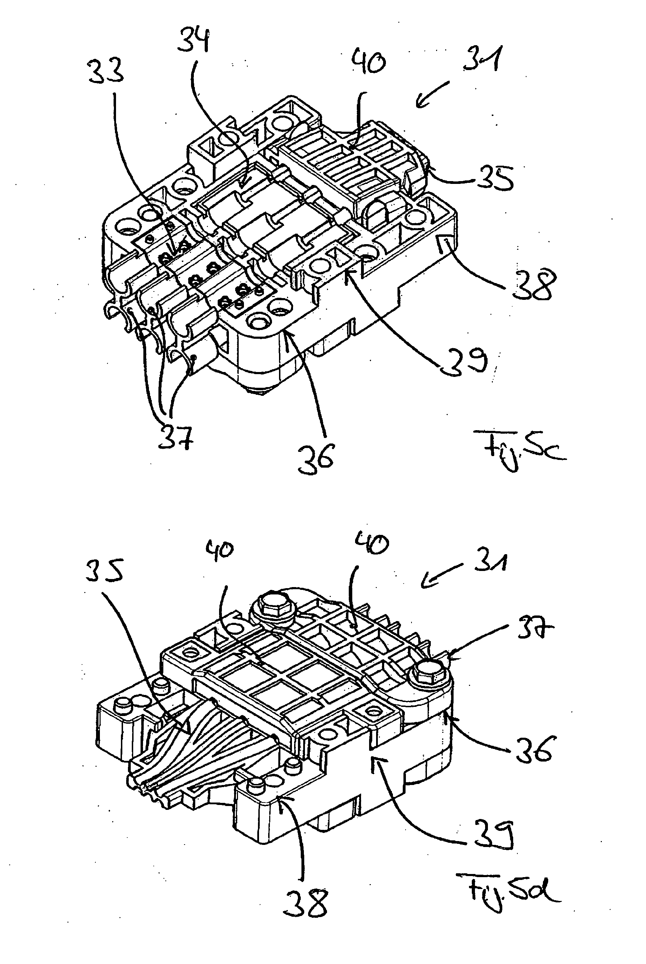

Wie am besten Fig. 5b und 5d entnommen werden kann, verfügen die Führungskanäle 35 für die aus den Mikroducts 32 herausgeführten Mikrokabel über eine in Richtung auf den jeweiligen Adapter 17 bzw. 17' konvergierende Konturierung.

Die Dichtmittel 34 für die Mikroducts und Mikrokabel verfügen über unterschiedliche Dichtabschnitte, nämlich einen ersten Dichtabschnitt für die Mikroducts und einen zweiten Dichtabschnitt für die Mikrokabel, die gemäß Fig. 5c durch eine entsprechende Abstufung der angepassten Durchmesser ineinander übergehen.

Die Zugabfangmittel 33, das Dichtmittel 34 und Führungskanäle 35 sind sowohl an einer Oberseite als auch an einer Unterseite der Handhabungseinrichtung 31 ausgebildet und über separate Gehäuseteile 40 der Handhabungseinrichtung 31 individuell zugänglich.

Obwohl die Erfindung unter Bezugnahme auf den aus DE 20 2006 006 019 U1 bekannten Dichtungskörper beschreiben wurde, ist die Erfindung nicht auf Kabelmuffen mit solchen Dichtungskörpern beschränkt. Die Erfindung kann auch bei anderen geteilten Dichtungskörpern mit mehreren Dichtungskörpersegmenten zum Einsatz kommen, wobei zwischen aneinandergrenzenden Dichtungskörpersegmenten Kabeleinführungsöffnungen ausgebildet sind.

Ferner kann die Erfindung grundsätzlich auch bei Kabelmuffen mit ungeteilten Dichtungskörpern, die Kabeleinführungsöffnungen aufweisen, zum Einsatz kommen.

### Bezugszeichenliste

- 10: Dichtungskörper
- 11: Dichtungskörpersegment
- 12: Ausnehmung
- 13: Dichtungskörpersegment
- 14: Kabeleinführungsöffnung
- 15: Dichtungselement
- 16: Betätigungseinrichtung
- 17, 17': Adapter
- 18: Grundkörper
- 19: Vorsprung
- 20: Vorsprung
- 21: Führungs- und Abdichteinrichtung
- 22: Führungsplatte
- 23: Dichtungselement
- 24: Führungskanal
- 25: Druckstück
- 26: Betätigungselement
- 27: Federscheibe
- 28: Federscheibe
- 29: Vorsprung
- 30: Ausnehmung
- 31: Handhabungseinrichtung
- 32: Mikroduct
- 33: Zugabfangmittel
- 34: Dichtmittel
- 35: Führungskanal
- 36: Endabschnitt
- 37: Führungsmittel

- 38: Endabschnitt
- 39: Mittelabschnitt
- 40: Gehäuseteil
- 41: Federelement
- 42: Aufnahme

## Patentansprüche

1. Kabelmuffe, mit einem einen Innenraum der Kabelmuffe definierenden Muffengehäuse und mit mindestens einem Dichtungskörper (10), über den Lichtweilenleiterkabel in einen Innenraum der Kabelmuffe einführbar sind, wobei der Dichtungskörper (10) mehrere Dichtungskörpersegmente (11, 13) aufweist, wobei zwischen aneinandergrenzenden Dichtungskörpersegmenten (11, 13) Kabeleinführungsöffnungen (14) mit einem im Bereich der jeweiligen Kabeleinführungsöffnung positionierten Dichtungselement ausgebildet sind, mit mindestens einem Adapter (17, 17'), wobei der oder jeder Adapter (17, 17') in eine zwischen Dichtungskörpersegmenten (11, 13) ausgebildete Kabeleinführungsöffnung (14) einsetzbar ist, wobei der oder jeder Adapter (17, 17') einen Grundkörper (18) aufweist, der durch das im Bereich der jeweiligen Kabeleinführungsöffnung (14) positionierte Dichtungselement (15) gegenüber den die Kabeleinführungsöffnung (14) definierenden Dichtungskörpersegmenten (11, 13) abdichtbar ist, und wobei im Grundkörper (18) des jeweiligen Adapters (17, 17') eine Führungs- und Abdichteinrichtung (21) für Mikrokabel positioniert ist, um Mikrokabel einerseits über den Grundkörper (18) des jeweiligen Adapters (17, 17') in den Innenraum der Kabelmuffe einzuführen und um andererseits die im Grundkörper (18) geführten Mikrokabel gegeneinander sowie gegen dem Grundkörper (18) des jeweiligen Adapters abzudichten, **gekennzeichnet durch** mindestens eine mit dem Dichtungskörper (10) der Kabelmuffe außerhalb des Innenraums derselben verbindbare Handhabungseinrichtung (31) für Mikroducts, in denen die Mikrokabel außerhalb des von der Kabelmuffe definierten Innenraums geführt sind, wobei die oder jede Handhabungseinrichtung (31) jeweils einer Kabeleinführungsöffnung (14) des Dichtungskörpers (10) derart zugeordnet ist, dass in einer Handhabungseinrichtung (31) mehrere Mikroducts handhabbar sind, nämlich derjenigen Mikrokabel, die über den in der jeweiligen Kabeleinführungsöffnung (14) positionierten Adapter (17, 17') in den Innenraum der Kabelmuffe einführbar sind, wobei die oder jede Handhabungseinrichtung (31) Zugabfangmittel (33) für die Mikroducts, Dichtmittel (34) für die Mikroducts und die Mikrokabel und Führungskanäle (35) für die Mikrokabel aufweist.

2. Kabelmuffe nach Anspruch 1, **dadurch gekennzeichnet, dass** die Zugabfangmittel (33) für die Mikroducts an einem ersten Endabschnitt der jeweiligen Handhabungseinrichtung (31), an welchen die Mikroducts und die in denselben geführten Mikrokabel in die Handhabungseinrichtung einführbar sind, ausgebildet sind, dass die Führungskanäle (35) für die Mikrokabel an einem zweiten, gegenüberliegenden Endabschnitt der jeweiligen Handhabungseinrichtung (31), an welchen die Mikrokabel ausgehend von Handhabungseinrichtung in den jeweiligen Adapter überführbar sind, ausgebildet sind, und dass die Dichtmittel (34) für die Mikroducts und die Mikrokabel in einem zwischen dem ersten Endabschnitt und dem zweiten Endabschnitt positionierten Mittelabschnitt der jeweiligen Handhabungseinrichtung (31) ausgebildet sind.

3. Kabelmuffe nach Anspruch 1 oder 2, **dadurch gekennzeichnet, dass** die Führungskanäle (35) für die Mikrokabel in Richtung auf den jeweiligen Adapter (17, 17') konvergieren.

4. Kabelmuffe nach einem der Ansprüche 1 bis 3, **dadurch gekennzeichnet, dass** die Dichtmittel (34) einen ersten Dichtabschnitt für die Mikroducts und einen zweiten Dichtabschnitt für die aus den Microducts herausgeführten Mikrokabel aufweisen.

5. Kabelmuffe nach einem der Ansprüche 1 bis 4, **dadurch gekennzeichnet, dass** an einer Oberseite und an einer Unterseite der Handhabungseinrichtung (31) die Zugabfangmittel (33), die Dichtmittel (34) und die Führungskanäle (35) ausgebildet sind, die jeweils über separate Gehäuseteile (40) der Handhabungseinrichtung zugänglich sind.

6. Kabelmuffe nach einem der Ansprüche 1 bis 5, **dadurch gekennzeichnet, dass** der Grundkörper (18) des jeweiligen Adapters (17, 17') über mindestens einen Vorsprung (19, 20) in mindestens eine Ausnehmung eines Gehäuses mindestens eines die Kabeleinführungsöffnung (14) definierenden Dichtungskörpersegmentes (11, 13) eingreift.

7. Kabelmuffe nach einem der Ansprüche 1 bis 6, **dadurch gekennzeichnet, dass** die im Grundkörper (18) des jeweiligen Adapters (17, 17') positionierte Führungs- und Abdichteinrichtung (21) für Mikrokabel als Mehrfachdichtstopfen ausgebildet ist, der über ein Druckstück (25) zur Abdichtung der in demselben geführten Mikrokabel komprimierbar ist.

8. Kabelmuffe nach einem der Ansprüche 1 bis 7, **dadurch gekennzeichnet, dass** die im Grundkörper (18) des jeweiligen Adapters (17) positionierte Führungs- und Abdichteinrichtung (21) unabhängig vom Dichtungselement (15) der Kabeleinführungsöffnung (14), in die der jeweilige Adapter (17) eingesetzt ist, komprimierbar und dekomprimierbar ist.

9. Kabelmuffe nach Anspruch 8, **dadurch gekennzeichnet, dass** hierzu das der Komprimierung und Dekomprimierung der Führungs- und Abdichteinrichtung (21) dienende Druckstück (25) des Adapters (17) über ein separates Betätigungselement (26) betätigbar ist.

10. Kabelmuffe nach einem oder mehreren der Ansprüche 1 bis 9, **dadurch gekennzeichnet, dass** der Dichtungskörper (10) ein mittleres, zylinderartiges Dichtungskörpersegment (11) und mehrere zylindersegmentartige Dichtungskörpersegmente (13) aufweist, wobei das mittlere, zylinderartige Dichtungskörpersegment (11) an einer äußeren Mantelfläche über den Umfang derselben verteilt mehrere Ausnehmungen (12) aufweist, wobei in jede der Ausnehmungen (12) des mittleren Dichtungskörpersegments (11) jeweils ein zylindersegmentartiges Dichtungskörpersegment (13) einführbar ist, und wobei zwischen dem mittleren Dichtungskörpersegment (11) und jedem zylindersegmentartigen Dichtungskörpersegment (13) jeweils eine Kabeleinführungsöffnung (14) mit einem im Bereich der Kabeleinführungsöffnung positionierten Dichtungselement (15) ausgebildet ist, und wobei in jede dieser Kabeleinführungsöffnung (14) ein Adapter (17, 17') einsetzbar ist.

## Claims

1. Cable sleeve, with a sleeve housing which defines an interior of the cable sleeve and with at least one sealing body (10), via which fiberoptic cables can be inserted into an interior of the cable sleeve, the sealing body (10) having a plurality of sealing body segments (11, 13), cable insertion openings (14) being formed between mutually adjacent sealing body segments (11, 13) with a sealing element positioned in the region of the respective cable insertion opening, with at least one adapter (17, 17'), the or each adapter (17, 17') being capable of being inserted into a cable insertion opening (14) formed between sealing body segments (11, 13), the or each adapter (17, 17') having a basic body (18), which can be sealed off with respect to the sealing body segments (11, 13) defining the cable insertion opening (14) by the sealing element (15), which is positioned in the region of the respective cable insertion opening (14), and a guide and sealing device (21) for microcables being positioned in the basic body (18) of the respective adapter (17, 17') in order firstly to insert microcables via the basic body (18) of the respective adapter (17, 17') into the interior of the cable sleeve and secondly in order to seal off the microcables guided in the basic body (18) with respect to one another and with respect to the basic body (18) of the respective adapter, **characterized by** at least one handling device (31), which can be connected to the sealing body (10) of the cable sleeve outside of the interior thereof, for microducts, in which the microcables are guided outside of the interior defined by the cable sleeve, the or each handling device (31) being associated with in each case one cable insertion opening (14) of the sealing body (10) in such a way that a plurality of microducts, specifically of those microcables which can be inserted into the interior of the cable sleeve via the adapter (17, 17') which is positioned in the respective cable insertion opening (14), can be handled in a handling device (31), the or each handling device (31) having strain relief means (33) for the microducts, sealing means (34) for the microducts and the microcables and guide channels (35) for the microcables.

2. Cable sleeve according to Claim 1, **characterized in that** the strain relief means (33) for the microducts are formed on a first end section of the respective handling device (31), on which the microducts and the microcables guided therein can be inserted into the handling device, **characterized in that** the guide channels (35) for the microcables are formed on a second, opposite end section of the respective handling device (31), on which the microcables can be guided, starting from the handling device, into the respective adapter, and **characterized in that** the sealing means (34) for the microducts and the microcables are formed in a central section of the respective handling device (31), which central section is positioned between the first end section and the second end section.

3. Cable sleeve according to Claim 1 or 2, **characterized in that** the guide channels (35) for the microcables converge in the direction of the respective adapter (17, 17').

4. Cable sleeve according to one of Claims 1 to 3, **characterized in that** the sealing means (34) have a first sealing section for the microducts and a second sealing section for the microcables guided out of the microducts.

5. Cable sleeve according to one of Claims 1 to 4, **characterized in that** the strain relief means (33), the sealing means (34) and the guide channels (35), which are each accessible via separate housing parts (40) of the handling device, are formed on an upper side and a lower side of the handling device (31).

6. Cable sleeve according to one of Claims 1 to 5, **characterized in that** the basic body (18) of the respective adapter (17, 17') engages, via at least one projection (19, 20), into at least one cutout in a housing of at least one sealing body segment (11, 13) defining the cable insertion opening (14).

7. Cable sleeve according to one of Claims 1 to 6, **characterized in that** the guide and sealing device (21), which is positioned in the basic body (18) of the respective adapter (17, 17'), for microcables is in the form of a multiple sealing stopper, which can be compressed via a pressure piece (25) for sealing of the microcables guided therein.

8. Cable sleeve according to one of Claims 1 to 7, **characterized in that** the guide and sealing device (21), which is positioned in the basic body (18) of the respective adapter (17), can be compressed and decompressed independently of the sealing element (15) of the cable insertion opening (14), into which the respective adapter (17) has been inserted.

9. Cable sleeve according to Claim 8, **characterized in that**, in addition the pressure piece (25) of the adapter (17), which pressure piece serves the purpose of compressing and decompressing the guide and sealing device (21), can be actuated via a separate actuating element (26).

10. Cable sleeve according to one or more of Claims 1 to 9, **characterized in that** the sealing body (10) has a central, cylindrical sealing body segment (11) and a plurality of sealing body segments (13) in the form of cylinder segments, the central, cylindrical sealing body segment (11) having a plurality of cutouts (12) distributed on an outer lateral surface over the circumference thereof, in each case one sealing body segment (13) in the form of a cylinder segment being capable of being inserted into each of the cutouts (12) in the central sealing body segment (11), and in each case one cable insertion opening (14) with a sealing element (15) positioned in the region of the cable insertion opening being formed between the central sealing body segment (11) and each sealing body segment (13) in the form of a cylinder segment, and it being possible for an adapter (17, 17') to be inserted into each of these cable insertion openings (14).

## Revendications

1. Embout de raccordement de câble présentant
un boîtier d'embout de raccordement qui définit un espace intérieur de l'embout de raccordement de câble et au moins un corps d'étanchéité (10) par lequel des câbles conducteurs d'ondes lumineuses peuvent être insérés dans un espace intérieur de l'embout de raccordement de câble,
le corps d'étanchéité (10) présentant plusieurs segments (11, 13) de corps d'étanchéité, des ouvertures (14) d'insertion de câble étant formées entre des segments adjacents (11, 13) du corps d'étanchéité avec un élément d'étanchéité positionné au niveau de chaque ouverture d'insertion de câble,
au moins un adaptateur (17, 17'), le ou les adaptateurs (17, 17') pouvant être insérés dans une ouverture (14) d'insertion de câble formée entre des segments (11, 13) du corps d'étanchéité,
le ou chaque adaptateur (17, 17') présentant un corps de base (18) qui peut être fermé hermétiquement par l'élément d'étanchéité (15) positionné au niveau de chaque ouverture (14) d'insertion de câble vis-à-vis des segments (11, 13) du corps d'étanchéité qui définissent l'ouverture (14) d'insertion de câble, et
un dispositif (21) de guidage et d'étanchéité de microcâbles étant positionné dans le corps de base (18) de chaque adaptateur (17, 17') pour d'une part insérer des microcâbles dans l'espace intérieur de l'embout de raccordement de câble par l'intermédiaire du corps de base (18) de l'adaptateur (17, 17') concerné et d'autre part assurer l'étanchéité des microcâbles passés dans le corps de base (18) les uns par rapport aux autres ainsi que par rapport au corps de base (18) de l'adaptateur respectif, **caractérisé par** au moins un dispositif (31) de manipulation de microconduits qui peut être relié au corps d'étanchéité (10) de l'embout de raccordement de câble à l'extérieur de l'espace intérieur de ce dernier, les microcâbles étant passés dans les microconduits à l'extérieur de l'espace intérieur défini par l'embout de raccordement de câble, le ou les dispositifs de manipulation (31) étant tous associés à une ouverture (14) respective d'insertion de câble du corps d'étanchéité (10) de telle sorte qu'une pluralité de microconduits, à savoir des microcâbles qui peuvent être insérés dans l'espace intérieur de l'embout de raccordement de câble par l'adaptateur (17, 17') positionné dans l'ouverture (14) respective d'insertion de câble puisse être manipulés dans un dispositif de manipulation (31), le ou les dispositifs de manipulation (31) présentant des moyens (33) de reprise de traction pour les microconduits, des moyens d'étanchéité (34) pour les microconduits et les microcâbles ainsi que des canaux de passage (35) pour les microcâbles.

2. Embout de raccordement de câble selon la revendication 1, **caractérisé en ce que** les moyens (33) de reprise de traction prévus pour les microconduits sont configurés à une première partie terminale du dispositif de manipulation (31) respectif auquel les microconduits et les microcâbles passés dans ces derniers peuvent être insérés dans le dispositif de manipulation, **en ce que** les canaux de passage (35) pour les microcâbles sont configurés en une deuxième partie d'extrémité opposée du dispositif de manipulation (31) respectif sur lequel les microcâbles partant du dispositif de manipulation peuvent être transférés dans l'adaptateur respectif et **en ce que** les moyens d'étanchéité (34) pour les microconduits et les microcâbles sont formés dans une partie centrale, disposée entre la première partie terminale et la deuxième partie terminale, du dispositif de manipulation (31) respectif.

3. Embout de raccordement de câble selon les revendications 1 ou 2, **caractérisé en ce que** les canaux de guidage (35) pour les microcâbles convergent en direction de l'adaptateur (17, 17') respectif.

4. Embout de raccordement de câble selon l'une des revendications 1 à 3, **caractérisé en ce que** les moyens d'étanchéité (34) présentent une première partie d'étanchéité pour les microconduits et une deuxième partie d'étanchéité pour les microcâbles qui sortent des microconduits.

5. Embout de raccordement de câble selon l'une des revendications 1 à 4, **caractérisé en ce que** les moyens (33) de reprise de traction, les moyens d'étanchéité (34) et les canaux de guidage (35) qui sont tous accessibles par des pièces séparées (40) du boîtier du dispositif de manipulation sont formés sur un côté supérieur et sur un côté inférieur du dispositif de manipulation (31).

6. Embout de raccordement de câble selon l'une des revendications 1 à 5, **caractérisé en ce que** le corps de base (18) de chaque adaptateur (17, 17') engage par au moins une saillie (19, 20) au moins une découpe ménagée dans un boîtier d'au moins un segment (11, 13) du corps d'étanchéité qui définit l'ouverture (14) d'insertion de câble.

7. Embout de raccordement de câble selon l'une des revendications 1 à 6, **caractérisé en ce que** le dispositif (21) de guidage et d'étanchéité pour microcâbles positionné dans le corps de base (18) de chaque adaptateur (17, 17') est configuré comme bouchon d'étanchéité multiple qui peut être comprimé par une pièce de poussée (25) en vue d'assurer l'étanchéité vis-à-vis du microcâble qui y est passé.

8. Embout de raccordement de câble selon l'une des revendications 1 à 7, **caractérisé en ce que** le dispositif (21) de guidage et d'étanchéité positionné dans le corps de base (18) de l'adaptateur (17) respectif peut être comprimé et décomprimé indépendamment de l'élément d'étanchéité (15) de l'ouverture (14) d'insertion de câble dans laquelle l'adaptateur (17) respectif est inséré.

9. Embout de raccordement de câble selon la revendication 8, **caractérisé en ce que**, de plus, la pièce de poussée (25) de l'adaptateur (17) qui sert à comprimer et décomprimer le dispositif (21) de guidage et d'étanchéité peut être actionnée par un élément d'actionnement (26) séparé.

10. Embout de raccordement de câble selon l'une ou plusieurs des revendications 1 à 9, **caractérisé en ce que** le corps d'étanchéité (10) présente un segment central cylindrique (11) de corps d'étanchéité et plusieurs segments cylindriques (13) de corps d'étanchéité, le segment cylindrique central (11) du corps d'étanchéité présentant plusieurs découpes (12) réparties à la périphérie d'une surface d'enveloppe extérieure, un segment cylindrique (13) de corps d'étanchéité pouvant être inséré dans chacune des découpes (12) du segment central (11) du corps d'étanchéité, une ouverture (14) d'insertion de câble qui présente un élément d'étanchéité (15) disposé au niveau de l'ouverture d'insertion de câble étant formée entre le segment central (11) du corps d'étanchéité et chaque segment cylindrique (13) du corps d'étanchéité, un adaptateur (17, 17') pouvant être inséré dans chacune de ces ouvertures (14) d'insertion de câble.
